# EUROPEAN PATENT APPLICATION

(11) **EP 2 711 928 A1**
(43) Date of publication of application: **26.03.2014**
(21) Application number: 13184727.9
(22) Date of filing: 17.09.2013
(51) Int. Cl.: G11B 20/10, G06F 17/30, G11B 20/12

(54) **Blu-ray disc playback apparatus and data pre-fetch method for java object applications.**

(30) Priority: 24.09.2012 KR 20120105688
(71) Applicant: Samsung Electronics Co., Ltd, Gyeonggi-do 443-742 (KR)
(72) Inventor: Yang, Jong-ho, Gyeonggi-do (KR); Bak, Bong-gil, Gyeonggi-do (KR); Kim, Min-seok, Gyeonggi-do (KR)
(74) Representative: Brandon, Paul Laurence

(57) **Abstract**

A Blu-ray disc playback apparatus includes a mounting unit in which a Blu-ray disc can be mounted; a storage in which a middleware is stored; and a controller that, after the Blu-ray disc is mounted in the mounting unit, runs the middleware, and performs in parallel an activation operation to activate an application for controlling a processing action with respect to the Blu-ray disc and a resource process operation to read and process a resource used by the application.

## Description

### CROSS-REFERENCE TO RELATED APPLICATIONS

This application claims priority from Korean Patent Application No. 10-2012-105688 filed September 24, 2012 in the Korean Intellectual Property Office, the disclosure of which is incorporated herein by reference in its entirety.

### BACKGROUND

### 1. Field

Apparatuses and methods consistent with the exemplary embodiments relate to a Blu-ray disc playback apparatus and a Blu-ray disc loading method thereof. More particularly, the exemplary embodiments relate to a Blu-ray disc playback apparatus that plays a Blu-ray disc by using a middleware in an optical disc-based application platform environment and a Blu-ray disc loading method thereof.

### 2. Description of the Related Art

According to the development of electronic technology, playback apparatuses that can play data from various types of recording media has been developed and distributed. Optical discs are used as one of the recording media. The optical disc is a storage medium from which data can be read by using the reflection of light.

A Blu-ray disc (hereinafter, referred to as BD) is a standard for third-generation optical discs, and refers to an optical recording storage medium that can store digital data for high-definition (HD) video and was determined by the Blu-ray Disc Association (BDA).

Since the BD was determined to be better than the HD-DVD disc of a competing standard, and was determined to be the next generation storage media in competing next generation DVD standards, the Blu-ray disc playback apparatus market has grown.

On the other hand, in an optical device-based application platform such as the Blu-ray disc playback standard, after a disc application is activated, the application processes resources required for content services. However, this has a disadvantage in that an application loading process and an initialization process which requires a lot of processing time should be performed prior to the processing of the resources.

In other words, the application performs all action controls of File Read, Decoding, and Composing used in the resource process for providing the content services. Therefore, only after an application launching process and an application loading process which take a long time are completed, can the resource process be started by the application. Also, since the application has the right to control the resource process, it is difficult for playback apparatus manufacturers to optimize the resource process.

Accordingly, there is a need for technologies that can shorten a loading time that users experience, and can optimize performance depending on a structure of each of the playback apparatuses.

### SUMMARY

Exemplary embodiments provide a Blu-ray disc playback apparatus that can shorten the loading time that Blu-ray disc users experience, and allow playback apparatus manufacturers to optimize a resource process and a loading method thereof.

According to an aspect of an exemplary embodiment, there is provided a Blu-ray disc playback apparatus, which may include a mounting unit in which a Blu-ray disc can be mounted; a storage in which a middleware is stored; and a controller that, after the Blu-ray disc is mounted in the mounting unit, runs the middleware, and performs in parallel an activation operation to activate an application for controlling a processing action with respect to the Blu-ray disc and a resource process operation to read and process a resource used by the application.

The controller may read application information and resource detailed information from at least one of the files recorded on the Blu-ray disc, read the application recorded on the Blu-ray disc by using the application information to perform the activation operation, and obtain the resources recorded on the Blu-ray disc by using the resource detailed information to perform the resource process operation.

The controller may run an application manager program within the middleware to perform the activation operation, and run a resource manager program within the middleware to perform the resource process operation.

The resource process operation may include a pre-processing operation to process the resource in a form that can be used by the application based on the resource detailed information.

The resource process operation may include at least one of a keeping operation to keep a pre-processed resource and a communication operation to provide the pre-processed resource to the application when a use request of the application occurs.

If a use request of the application for the resource occurs before the pre-processing operation is completed, the controller may control the application to directly perform the pre-processing operation with respect to the resource.

If a use request of the application for the resource occurs before the pre-processing operation is completed, the controller may first perform the pre-processing operation with respect to the resource through the middleware, and then, provide the pre-processed resource to the application.

The controller may acquire lifecycle information with respect to the resource from the Blu-ray disc, and manage the resource based on the acquired lifecycle.

The controller may read the application information and the resource detailed information by using the Blu-ray Disk Java Object (BDJO) file among the files recorded on the Blu-ray disc.

The controller may read the application information by using the BDJO file among the files recorded on the Blu-ray disc, and read the resource detailed information by using a title resource table recorded on the Blu-ray disc.

According to another aspect of the present disclosure, a disc loading method for a Blu-ray disc playback apparatus may include running a middleware after a Blu-ray disc is mounted in the Blu-ray disc playback apparatus, and performing in parallel an activation operation to activate an application for controlling a processing action with respect to the Blu-ray disc by using the middleware and a resource process operation to read and process a resource used by the application.

The performing in parallel may include reading application information and resource detailed information from at least one of the files recorded on the Blu-ray disc by using the middleware; and reading and activating the application recorded on the Blu-ray disc by using the application information according to an application manager within the middleware, and acquiring and processing the resource recorded on the Blu-ray disc by using the resource detailed information according to a resource manager program within the middleware.

The resource process operation may include at least one of a pre-processing operation to process the resource in a form that can be used by the application, a communication operation to provide a pre-processed resource to the application, and a keeping operation to keep the pre-processed resource.

The application information and the resource detailed information may be read from a BDJO file among the files recorded on the Blu-ray disc.

The application information may be read from a BDJO file among files recorded on the Blu-ray disc, and the resource detailed information may be read from a title resource table recorded on the Blu-ray disc.

According to various exemplary embodiments of the present disclosure, the loading time that users experience when playing a Blu-ray disc can be shortened, and playback apparatus manufacturers can optimize a resource process depending on a structure of each playback apparatus.

### BRIEF DESCRIPTION OF THE DRAWINGS

These and/or other aspects will become apparent and more readily appreciated from the following description of exemplary embodiments, taken in conjunction with the accompanying drawings of which:

FIG. 1 is a block diagram illustrating a configuration of a Blu-ray disc playback apparatus according to an exemplary embodiment;

FIG. 2 is a block diagram illustrating one example of a display apparatus including a Blu-ray disc playback apparatus according to an exemplary embodiment;

FIG. 3 is a view illustrating files that can be written on a Blu-ray disc according to an exemplary embodiment;

FIG. 4 is a view illustrating the parallel processing of an application activation operation and a resource process operation by using a BDJO file;

FIG. 5 is a view illustrating that a controller performs in parallel an application activation operation and a resource process operation by using a middleware;

FIG. 6 is a view illustrating a method for accessing a resource description file (RDF) by specifying a RDF name in an application resource information table (ARIT) of a BDJO file and content which is described in the RDF;

FIG. 7 is a view illustrating one example of a location of a RDF within a Blu-ray disc;

FIG. 8 is a view illustrating a resource preprocessing operation of middleware according to a specific example of the RDF as illustrated in FIG. 6;

FIG. 9 is a view illustrating a method for accessing a RDF through AppCachelnfo expansion of a BDJO file;

FIG. 10 is a view illustrating a method for accessing a RDF by introducing a title resource table;

FIG. 11 is a view illustrating a method in that an application acquires pre-processed resources through a resource manager;

FIG. 12 is a table illustrating one example of a lifecycle of a resource;

FIG. 13 is a view illustrating resource management of a resource manager according to the table as illustrated in FIG. 12; and

FIG. 14 is a flowchart illustrating a Blu-ray disc loading method.

Throughout the drawings, like reference numerals will be understood to refer to like parts, components and structures.

### DETAILED DESCRIPTION OF THE EXEMPLARY EMBODIMENTS

Hereinafter, certain exemplary embodiments will be described in detail with reference to the accompanying drawings.

The matters defined herein, such as a detailed construction and elements thereof, are provided to assist in a comprehensive understanding of this description. Thus, it is apparent that the exemplary embodiments may be carried out without those defined matters. Also, well-known functions or constructions are omitted to provide a clear and concise description of the exemplary embodiments. Further, dimensions of various elements in the accompanying drawings may be arbitrarily increased or decreased to assist in a comprehensive understanding.

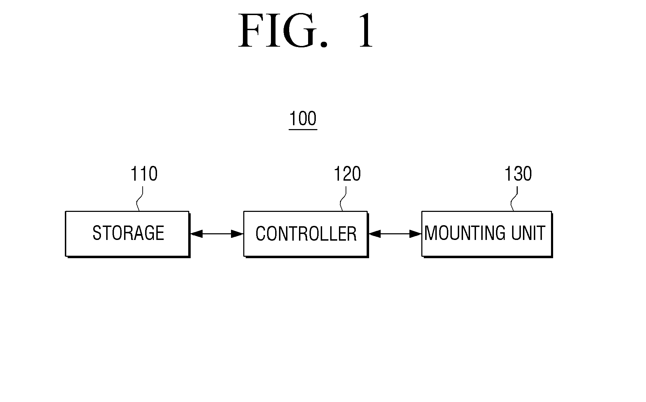

FIG. 1 is a block diagram illustrating the configuration of a Blu-ray disc playback apparatus according to an exemplary embodiment of the present disclosure. Referring to FIG. 1, a Blu-ray disc playback apparatus 100 includes a storage 110, a controller 120, and a mounting unit 130.

The mounting unit 130 is a component to mount a Blu-ray disc. The mounting unit 130 may include a tray, an optical pickup, a loading motor, a spindle motor, a sled motor, etc. After a Blu-ray disc is mounted in the tray of the mounting unit 130, the spindle motor is automatically driven to rotate the Blu-ray disc, and the optical pickup is moved by the sled motor to access the disc.

The storage 110 can store a variety of software such as operating system, middleware, etc., basic data required for driving each of the software, various types of data updated during use of the software, etc.

When the Blu-ray disc is mounted in the mounting unit 130, the controller 120 runs the middleware to load the Blu-ray disc. In detail, the controller 120 performs in parallel (i.e., performs simultaneously) an activation operation to activate an application for controlling a process action of the Blu-ray disc and a resource process operation that reads and processes resources used in the application.

The Blu-ray disc playback apparatus 100 as illustrated in FIG. 1 may be implemented as a Blu-ray disc dedicated playback apparatus system. Alternatively, the Blu-ray disc playback apparatus 100 may be implemented as a universal playback apparatus system for personal computers, a playback apparatus system for notebook computers, etc. Also, the Blu-ray disc playback apparatus 100 may be included in a display apparatus with a display member.

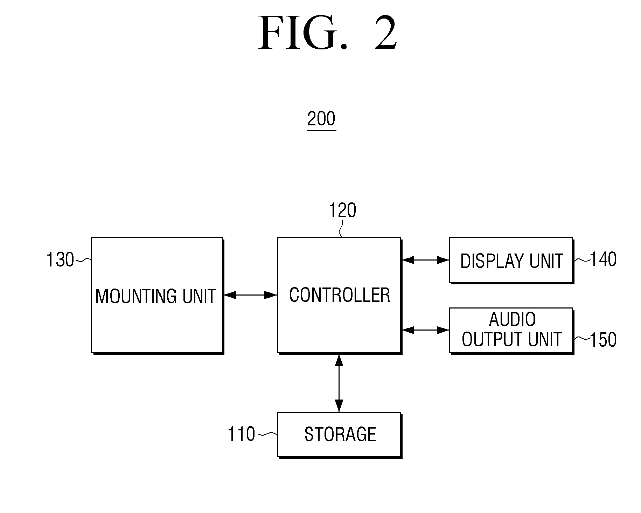

FIG. 2 is a block diagram illustrating one example of a display apparatus including the Blu-ray disc playback apparatus 100 as illustrated in FIG. 1.

Referring to FIG. 2, the display apparatus 200 includes a storage 110, a controller 120, a mounting unit 130, a display 140, and an audio output unit 150. After a Blu-ray disc is mounted in the mounting unit 130, the controller 120 runs the middleware stored in the storage 110 to load the Blu-ray disc as described above. Then, depending on a user's selection, the controller 120 plays the Blu-ray disc and detects video data and audio data recorded on the Blu-ray disc. The video data may be output onto a screen by the display 140, and the audio data may be output through the audio output unit 150. Illustration and description of configurations such as a de-multiplexer, a video decoder, a video parser, an audio decoder, an audio parser, etc. to process the video data and audio data will be omitted.

In the configuration as illustrated in FIGS. 1 and 2, the controller 120 can perform in parallel the activation operation to activate an application and the resource process operation that reads and processes resources used in the application by using information stored in at least one of files recorded on the Blu-ray disc.

In detail, the controller 120 can read application information and resource detail information from a specific file among the files of the Blu-ray disc. Then, the controller 120 reads the application recorded on the Blu-ray disc by using the read application information and performs the activation operation thereof. Also, the controller 120 acquires the resources recorded on the Blu-ray disc by using the resource detail information and performs the resource process operation.

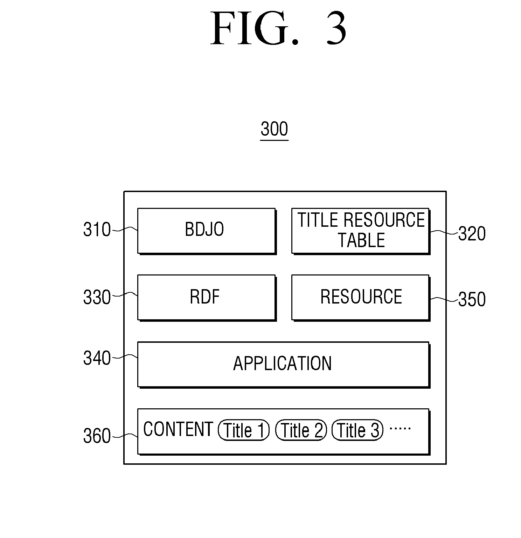

FIG. 3 is a view illustrating one example of the configuration of a file that can be written on a Blu-ray disc. Referring to FIG. 3, the Blu-ray disc 300 may store a BDJava object (BDJO) file 310, a title resource table 320, a resource description file (RDF) 330, an application 340, resources 350, content 360, etc. The BDJO file 310 is a file in which initial drive information of a Java application is specified in the Blu-ray disc application standard. The RDF 330 is a file that contains detailed information with respect to resources that are required to be processed for use of the application. The title resource table 320 is a file that is introduced as one of the methods that the controller 120 uses to access the RDF according to an exemplary embodiment, and specifies a location of the RDF with respect to the resource that needs to be processed for use of the application. Also, the application 340 is a file for controlling the process action of the Blu-ray disc, such as providing content service, etc., in the Blu-ray disc specification. The resources 350 are files, such as images, fonts, audios, etc., which are processed into a form that the application can use to provide the content services and which are used thereby. Also, the content 360 is a file in which audio or video data that will be played by the application are recorded.

According to an exemplary embodiment, the controller 120 detects the application information required for the application activation operation, and the resource detailed information required for the resource process operation from the BDJO file among the files recorded on the above-described Blu-ray disc.

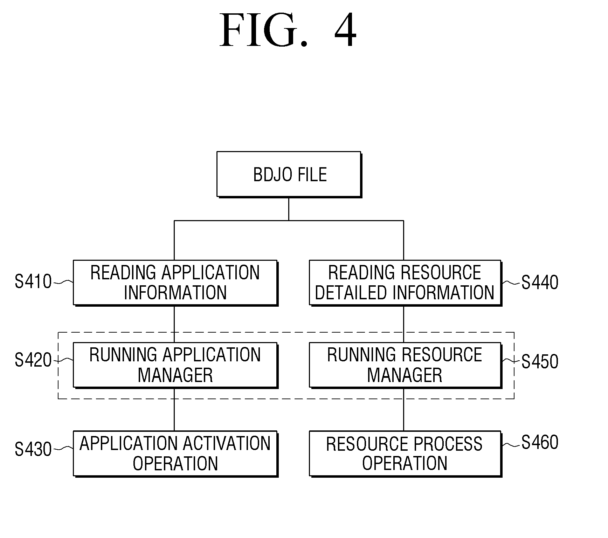

FIG. 4 is a view for explaining a process to perform in parallel the application activation operation and the resource process operation by using the BDJO file. Referring to FIG. 4, the controller 120 reads in parallel the application information (S410) and the resource detailed information (S440) from the BDJO file 310. Then, the controller 120 in parallel reads an application 340 written on the Blu-ray disc to perform an application activation operation (S430) by using the read application information, and acquires resources 350 written on the Blu-ray disc to perform a resource process operation (S460) by using the read resource detailed information. Particularly, the controller 120 runs an application manager program (S420) and a resource manager program (S450) within the middleware to perform the application activation operation (S430) and the resource process operation (S460), respectively.

On the other hand, the resource process operation performed by the controller 120 may include a pre-processing operation that processes the resource into a form that can be processed by the application, a keeping operation that keeps the resource processed by the pre-processing operation, and a communication operation that provides the resource that was pre-processed and is being kept to the application when a use request of the application occurs.

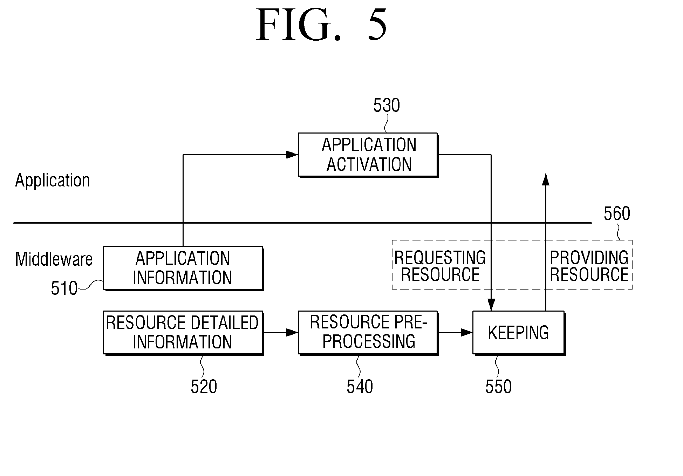

FIG. 5 is a view illustrating that the controller performs the resource process operation by using the middleware. Referring to FIG. 5, the controller 120 activates the application 530 by using the application information 510 that was read by using the middleware. In addition, the controller 120 performs the pre-processing operation 540 of the required resource by using the resource detailed information 520 that was read in parallel, and then, performs the keeping operation 550 of the pre-processed resource and the communication operation 560 with the activated application. A detailed explanation of each of the operations will be described hereinafter.

On the other hand, the above-described resource process operation may be performed according to the resource detailed information, and the resource detailed information is described in a RDF 330 written on the Blu-ray disc. Accordingly, for performing the resource process operation, the controller 120 needs to first acquire the RDF 330, and then, performs the resource process operation according to the resource detailed information described in the RDF 330.

Although not illustrated in FIG. 5, a process of the pre-processing operation 540 may further include a process in which the middleware performs decoding using hardware.

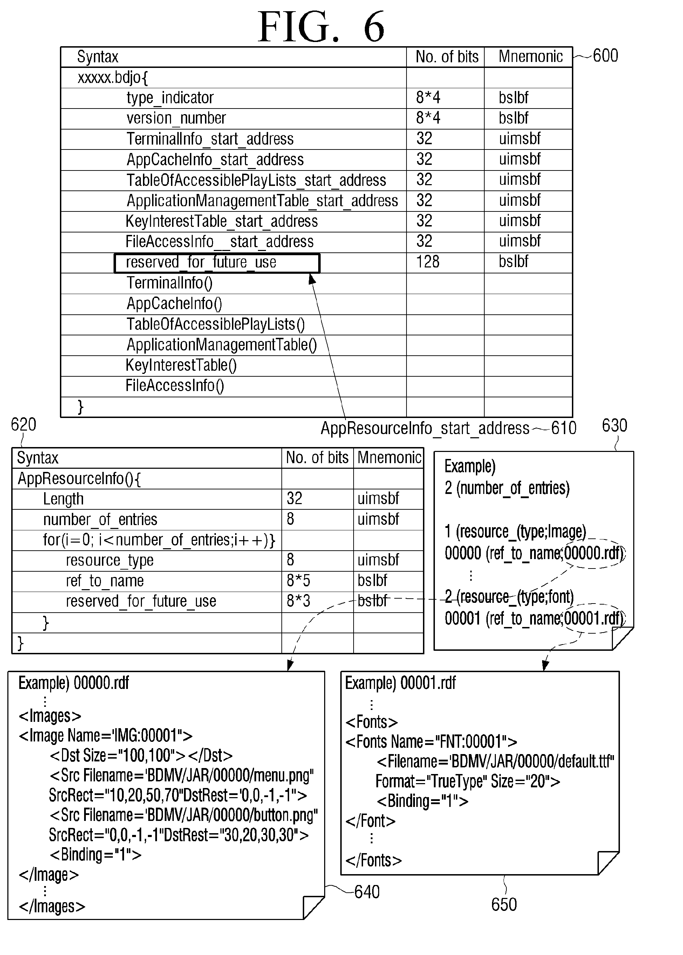

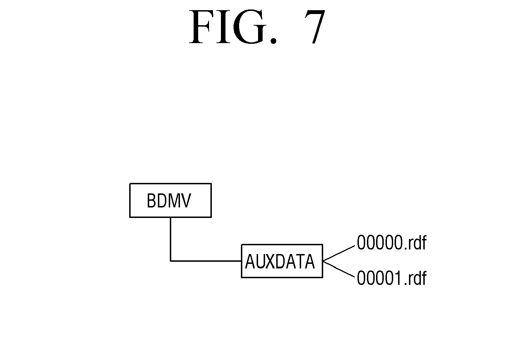

FIG. 6 is a view illustrating a method for accessing the RDF by specifying the RDF in an application resource information table (ARIT) of a BDJO file and detail content of the RDF, and FIG. 7 is a view illustrating a pre-processing operation depending on the exemplary content of the RDF of FIG. 6.

Since the environment required to activate the application (output setting, cache, remote control keys to which the application is of interest, etc.) and detailed application activation information (locations of class files, LifeCycle control-related information, Icon information, etc.) are described in the BDJO file, the controller 120 can process the BDJO file to obtain the application information that is required to activate the application. However, the manner in which the controller 120 obtains the RDF may become problematic. In an exemplary embodiment, the controller 120 obtains the RDF by additionally providing detailed descriptions with respect to resources (images, fonts, sounds, etc.) that will be processed by the middleware as the environment required to activate the application in an application description file such as the BDJO file.

Referring to FIG. 6, a reference number 600 represents syntax of the BDJO file. The BDJO file of the Blu-ray disc standard expresses a location (start_address) from which each of detailed descriptions starts within the BDJO file as 4 byte information. The controller 120 needs to access the ARIT 620 to obtain information about each of the resources to be pre-processed. The example of reference number 600 introduces AppResourcelnfo_start_address 610 in the content of the BDJO file to specify a location of the ARIT 620. The AppResourcelnfo_start _address 610 shows where the ARIT 620 is located within the BDJO file 600. Accordingly, the controller 120 can access the ARIT 620 through the AppResourcelnfo_start _address 610.

An ARIT example 630 of FIG. 6 shows an Image and a font as the resources to be pre-processed. 'Number_of_entries' may be information to represent how many kinds of resources should be pre-processed. In an example of FIG. 6, since the image and font are described, a value of the 'number_of_entries' is 2. Accordingly, two pre-processing resources are described below. 'Resource_type' specifies the kind of the resource to be pre-processed. For example, if a value of the 'resource_type' is 1, the resource is an image, and if the value of the 'resource_type" is 2, the resource is a font. However, one value may be specified about each of all resources available to be pre-processed. 'Ref_to_name' specifies a name of the RDF that describes a detailed processing method of each of the resources. In the example of the reference number 630, real file names of the RDFs are specified as 00000.rdf and 00001.rdf.

On the other hand, FIG. 7 illustrates one example of a location of the RDF within the Blu-ray disc. Referring to FIG. 7, if the RDF is located in "/BDMV/AUXDATA", the controller 120 acquires 00000.rdf 640 and 00001.rdf 650 from "/BDMV/AUXDATA" of the Blu-ray disc to process each of the resources.

In other words, after the controller 120 checks the AppResourcelnfo_start _address 610 in the BDJO file, and accesses the ARIT 620, it checks the file name of the RDF from the ARIT 620, and obtains the RDF 640 and 650 from a folder at a defined location.

On the other hand, an exemplary embodiment as illustrated in FIG. 6 shows the specified content of the RDF.

Sizes, access paths, lifecycles, distinguished names, etc. of resources that should be processed may be described in the RDF. Also, all detailed information that is required to process the resources including diverse and complex actions such as to create empty image buffer zones and text processing (size, style, location) may be described in the RDF. The RDF may be described by various methods such as an extensible markup language XML or a binary.

Since the 00000.rdf 640 of FIG. 6 illustrates that an image has a size of 100 (width) * 100 (height) after processing thereof is completed, and is accomplished by copying a specified area of menu.png and a specified area of button.png, and the 00001.rdf 650 describes the size and access path about the font file, the controller 120 performs the pre-processing operation of the image and font depending on the processing information.

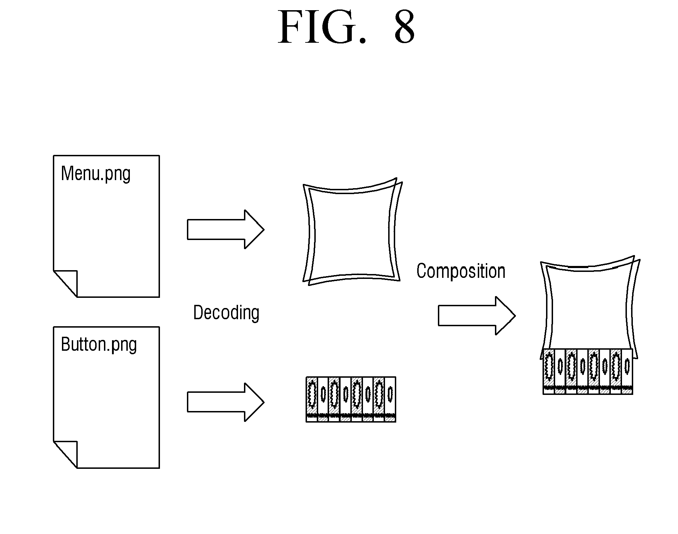

FIG. 8 is a view illustrating an example of the pre-processing operation where the controller 120 decodes each of a menu image and a button image, and copies and pastes the decoded images to the same area to combine them depending on the resource detailed information described in the obtained 00000.rdf 640.

The resources that are pre-processed to be used by the application are kept by the controller 120, and, when the application requires it, may be provided to the application.

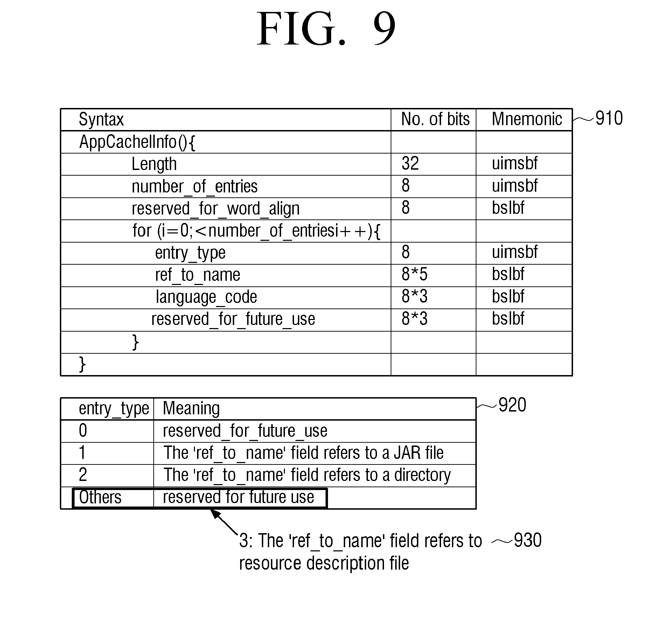

On the other hand, a method to expand Application Cache Information of the BDJO file may be used as another exemplary embodiment to obtain the RDF by using the BDJO file. FIG. 9 illustrates this. A reference number 910 represents syntax of AppCachelnfo, a reference number 920 is a table to represent files to be previously cache-processed, and a reference number 930 is an example that the resource is introduced in the 920 with a new value.

In the Blu-ray standard, it is possible to previously request the middleware to put specific files in the cache for smooth driving of the application, and the files that should be put in the cache are described in the AppCachelnfo within the BDJO file. Here, since it is also possible to see that the resources that should be pre-processed are operations that are processed and put in the cache, by specifying access to the RDF in the AppCachelnfo of the BDJO file, the controller 120 is allowed to obtain the RDF for the resource process operation.

In the reference number 920, a related art cache-processing may possibly be performed on a Java ARchive (JAR) file (entry_type "1") and a directory (entry_type "2"). However, as one example illustrated by reference number 930 in FIG. 9, entry_type "3" may be introduced as a new value for the resource, and then this can be used as description about the pre-processed resource. At this time, a value of the ref_to_name indicates a RDF name for each of the resources. Accordingly, the controller 120 can check the RDF name specified in the AppCachelnfo from the BDJO file, and can obtain the RDF for each of the resources in the location defined within the disc.

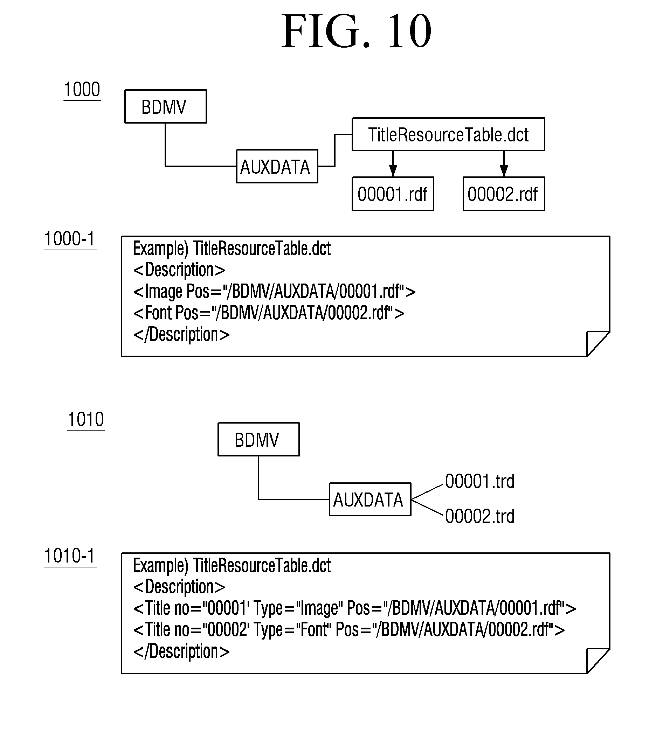

On the other hand, contrary to the description above, the controller 120 may obtain the RDF without using the BDJO file. This is possible by introducing a title resource table. FIG. 10 illustrates two examples of the title resource table. Reference numbers 1000 and 1000-1 illustrate a method that one title resource table file includes information for all titles, and reference numbers 1010 and 1010-1 is a method where each of the titles has a separate title resource table file.

Referring to FIG. 10, if the specification is specified so that the title resource table file exists in "/BDMV/AUXDATA", before activating the application, the controller 120 searches a title resource table file (TitleResourceTable.dct in the example) from "/BDMV/AUXDATA" folder and obtains a location of a RDF for the resources that should be pre-processed before the title is played. On the other hand, the location where the title resource table file can exist is a location where the playback apparatus can access and is indicated as a URL.

In an example of the reference number 1000, the "/BDMV/AUXDATA" folder has one title resource table file (TitleResourceTable.dct), and the file includes a description of the RDF for all titles within the disc (00001.rdf, 00002.rdf). An example of the written description is the reference number 1000-1.

The reference number 1010 is another exemplary embodiment of the title resource table file, and is a method where there is a separate title resource table file for each of the titles. In the "/BDMV/AUXDATA" folder, there are two title resource table files, that is, 00001.trd for a first title, and 00002.trd for a second title. Each of the title resource table files includes the types of the resources and the location of the RDF for the title. An example of the written description thereof is the reference number 1010-1.

In summary of the above-description, there may be various methods that the controller reads the application information for the application activation and the resource detailed information for the resource process operation. However, according to an exemplary embodiment, the controller can read both the application information and the resource detailed information by using the BDJO files. Alternatively, the controller can read the application information from the BDJO file and the resource detailed information from the introduced title resource table. The controller uses the read information to process in parallel the application activation operation and the resource pre-processing operation as illustrated in FIG. 5.

On the other hand, the activated application uses the pre-processed resource to play the content recorded on the Blu-ray disc. According to the exemplary embodiments, since the controller 120 uses the middleware to perform the resource process operation, when the activated application requires the pre-processed resources in order to play the content, the controller 120 can perform the communication operation that provides the application with the corresponding resources that have been kept after the pre-processed operation was completed.

For this communication operation, the RDF specifies a distinguished name for each of the pre-processed resources and provides an access method by the application after the pre-processing operation. Referring to the detailed example of FIG. 6, IMG: 00001 is specified as the distinguished name of the generated image in 00000.rdf 640 and FNT: 00001 is specified as the distinguished name of the font in 00001.rdf 650.

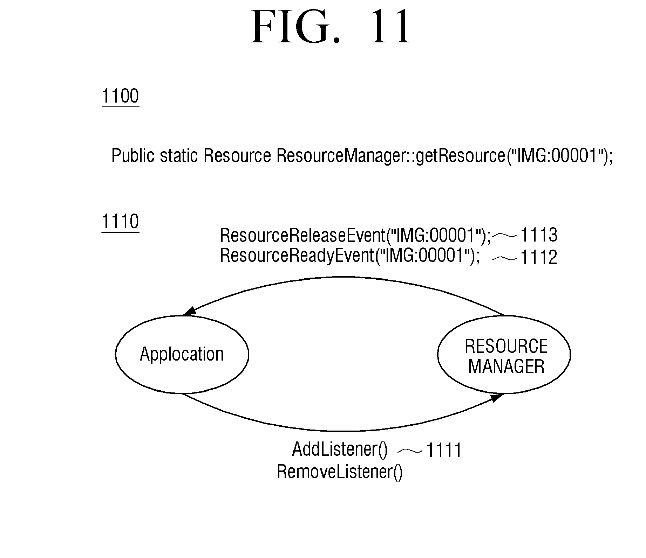

FIG. 11 is a view illustrating one example of a method to obtain pre-processed resources from the middleware. A reference number 1100 illustrates a method to obtain the pre-processed resources through a resource manager within the middleware, and a reference number 1110 illustrates that a Listener is registered in the resource manager, and thus, the communication operation is performed thereby. Here, the resource manager is a program within the middleware, and thus, the controller 120 can run the resource manager program to perform the resource process operation. This was explained in the description for FIG. 4.

If, when the application requests the required pre-processed resource to the resource manager, the corresponding resource is a resource the pre-processing operation of which was completed and that is kept, the application can request the required resource from the resource manager to obtain the resource in the same way as the reference number 1100. In other words, according to an example of the reference number 1100, when the application needs an image resource among the resources, the application requests the resource manager to provide the image resource by using IMG: 00001 of the distinguished name of the pre-processed resource specified in the RDF, and the resource manager provides a pre-processed image named IMG: 00001 to the application depending on the request of the application.

On the other hand, if, when the application requests the resource, the pre-processed operation thereof is not completed, it may not be possible to fulfill the request. This problem may be solved in two different ways. First, the middleware may give the application a failure value, for example, a return null and the application directly performs the pre-processing operation with respect to the corresponding resource. Second, the middleware may first perform the pre-processing operation with respect to the corresponding resource and then provide it to the application.

According to an exemplary embodiment, if, when the application requests the resource, the pre-processing operation thereof is not completed, the controller 120 returns a value that indicates a failure to the application, and then, allows the application to directly perform the pre-processing operation of the resource. According to another exemplary embodiment of the present disclosure, the controller 120 first performs the pre-processing operation by using the middleware, a corresponding application programming interface (API) stands by until the operation is completed, and, after the pre-processing operation is completed, the pre-processed resource is provided to the application.

However, if every time the application wishes to acquire the pre-processed resource, the application has to transmit requests to the middleware with regard to the resources that the application needs, this process may be inefficient. Accordingly, as the reference number 1110 of FIG. 11 illustrates, if the application registers a listener in the resource manager with respect to a resource which the application has an interest in (1111), and, when the pre-processing operation of the corresponding resource by the resource manager is completed (1112), or when a keeping operation is completed and keeping of the resource is released (1113), the resource manager transmits the completion information to the application. The application can request only the resource for which the pre-processing operation was completed and that has been kept. As a result, the case that, when the application requests the resource, the pre-processing operation thereof is not completed as described above does not matter. Therefore, the communication operation may be performed in such a manner.

On the other hand, if the pre-processing operation is completed, the controller 120 keeps the resource for the above-described communication operation. In this case, time the controller 120 keeps up the resource may be a problem. Based on the resources, some resources may need to be used even after the disc is ejected, or on the contrary, a situation may occur that, after the application using each of the resources is terminated, the resource is released and the right to use a memory, etc. is passed over to another module. Also, the Blu-ray disc provides a content service per a title. Accordingly, when, within one disc, a plurality of contents has different titles but uses the same image or font, the pre-processing operation that occurs in the middleware every time whenever each of the titles is loaded may be an unnecessary action.

Accordingly, there is a need to control a lifecycle of each of the resources used by the application. This may be solved by specifying a lifecycle of each of the resources in a specific file within the Blu-ray disc and allowing the controller to read the lifecycle and to use the resource based on the lifecycle.

Referring to specific examples of RDF of FIG. 6 according to an exemplary embodiment, values of bindings are illustrated in the contents of 00000.rdf 640 and 00001.rdf 650. Each of the values is a value of the lifecycle for the corresponding resource. On the other hand, the lifecycle of the resource may be written in another file within the Blu-ray disc, and not in the RDF.

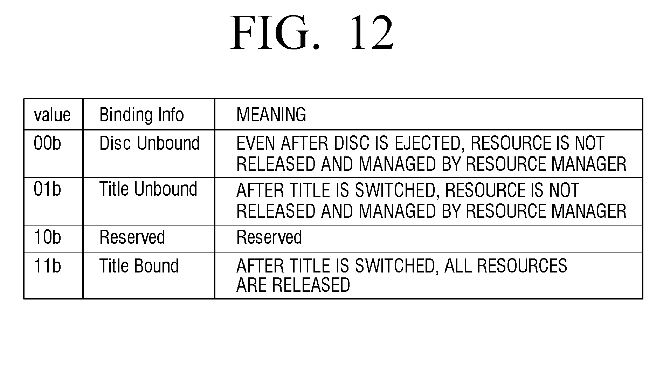

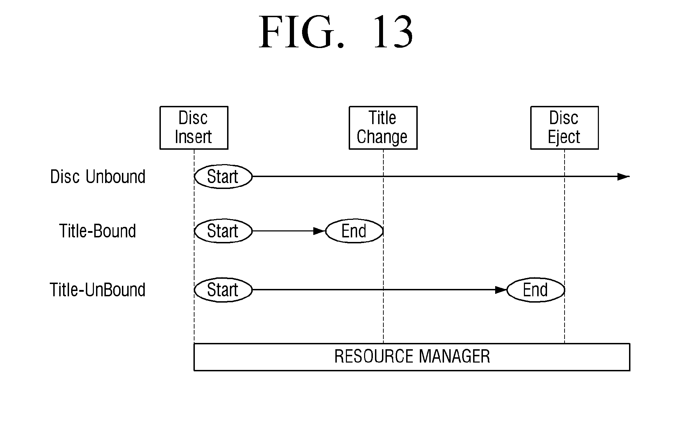

FIGS. 12 and 13 are views for explaining the lifecycle of the resource. FIG. 12 is a table illustrating the property and meaning of each of the binding values, and FIG. 13 is a view illustrating an operation when the title of the resource that is managed by the resource manager is switched.

Referring to FIG. 12, each of the resources has properties of Title Bound, Title Unbound, and Disc Unbound depending on the binding values. The Title Bound indicates a property that the resource can be used for only one title, and when the title is switched, the resource is released from keeping of the middleware. The Title Unbound indicates a property that the resource may be used after the title is switched to another title, and, after the title is switched, and whether the resource is used in the switched title is checked, continuous use of the resource has to be determined. The Disc Unbound indicates a property of the resource that may be used after the disc is ejected.

According to an exemplary embodiment of the present disclosure, the controller 120 obtains the application information and RDF from the BDJO file, performs in parallel the application activation operation and the pre-processing operation, and keeps the pre-processed resource. At this time, the lifecycle of the resource may be specified in the RDF. According to specified examples 640 and 650 of the RDF as illustrated in FIG. 6, since all the lifecycle values of the resources are specified as 1, the resources have the property of Title Unbound.

As a result, as illustrated in FIG. 13, the resource manager does not release the keeping of the image and font of the pre-processed resource immediately after the title is switched, but after checking whether the image and font are used in the switched title, determines whether to release the keeping of the resource. In other words, the resource manager handles the resources as the property of Title Unbound.

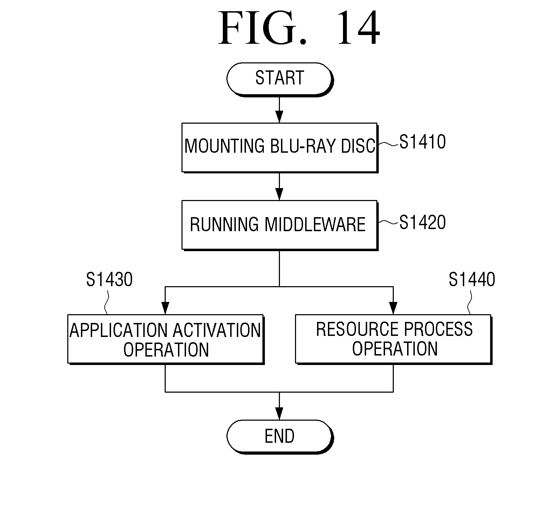

FIG. 14 is a flowchart for explaining a Blu-ray disc loading method according to an exemplary embodiment. Referring to FIG. 14, after a Blu-ray disc is mounted in a Blu-ray disc playback apparatus (S1410), middleware is run (S1420). The run middleware performs in parallel an activation operation (S1430) to activate an application for controlling a processing action with respect to the Blu-ray disc and a resource process operation (S1440) to read and process resources used by the application.

Then, a step of loading the Blu-ray disc may be composed of a step of reading application information and resource detailed information from at least one of the files that are recorded on the Blu-ray disc by using the middleware, and a step of reading and activating an application recorded on the Blu-ray disc by using the application information according to an application manager program within the middleware and acquiring and processing resources recorded on the Blu-ray disc by using the resource detailed information according to a resource manager program within the middleware.

Here, the resource process operation may include at least one of a pre-processing operation to process the resource in a form that can be used by the application, a communication operation to provide the application with the resource when the pre-processing operation is completed according to the request of the application, and a keeping operation to keep the pre-processed resource.

On the other hand, the application information and resource detailed information may be read from the BDJO file among the files recorded on the Blu-ray disc.

Alternatively, the application information may be read from the BDJO file among the files recorded on the Blu-ray disc, and the resource detailed information may be read from a title resource table recorded on the Blu-ray disc.

As described above, according to various exemplary embodiments, since a middleware can activate an application and at the same time process resources based on resource processing information generated by a Blu-ray disc manufacturer, and process the resources in a way that is optimized for the platform, when playing a Blu-ray disc, loading time that a user experiences may be shortened.

The middleware or disc loading method of the Blu-ray disc playback apparatus according to various exemplary embodiments may be formed as software and mounted in the Blu-ray disc playback apparatus. The BDJO file expended to acquire the resource process information of the middleware or the title resource table may be introduced as software and recorded on the Blu-ray disc.

In detail, according to an exemplary embodiment of the present disclosure, in the Blu-ray disc playback apparatus may be disposed a non-transitory computer readable medium storing a program that performs a step of running the middleware after the Blu-ray disc is mounted, and a loading step of performing in parallel the activation operation to activate the application for controlling the processing action with respect to the Blu-ray disc by using the middleware, and the resource process operation to read and process resources used by the application.

The non-transitory computer readable medium refers not to a medium to store data for a short moment like a register, a cache, a memory, etc., but a medium that can store data in a semi-permanent state and can be read by devices. Specifically, the middleware and programs as described above may be stored on the non-transitory computer readable medium, such as a CD, a DVD, a hard disc, a Blu-ray disc, an USB, a memory card, a ROM, etc., and may be provided.

While the exemplary embodiments of the present disclosure have been described, additional variations and modifications of the exemplary embodiments may occur to those skilled in the art once they learn of the basic inventive concepts. Therefore, it is intended that the appended claims shall be construed to include both the above exemplary embodiments and all such variations and modifications that fall within the spirit and scope of the inventive concepts.

## Claims

1. A Blu-ray disc playback apparatus comprising:
a mounting unit in which a Blu-ray disc is mountable;
a storage which stores a middleware; and
a controller which, when the Blu-ray disc is mounted in the mounting unit, runs the middleware, and performs in parallel an activation operation to activate an application recorded on the Blu-ray disc for controlling a processing action with respect to the Blu-ray disc, and a resource process operation to read and process at least one resource recorded on the Blu-ray disc and used by the application.

2. The Blu-ray disc playback apparatus of claim 1, wherein
the controller reads application information and resource detailed information from at least one file recorded on the Blu-ray disc,
reads the application recorded on the Blu-ray disc based on the read application information and performs the activation operation, and
obtains the at least one resource recorded on the Blu-ray disc based on the resource detailed information to perform the resource process operation.

3. The Blu-ray disc playback apparatus of claim 2, wherein
the controller runs an application manager program within the middleware to perform the activation operation, and
runs a resource manager program within the middleware to perform the resource process operation.

4. The Blu-ray disc playback apparatus of claim 2 or 3, wherein
the resource process operation comprises a pre-processing operation which processes the resource in a form that can be processed by the application based on the resource detailed information.

5. The Blu-ray disc playback apparatus of claim 4, wherein
the resource process operation comprises at least one of a keeping operation to keep a pre-processed resource and a communication operation to provide the pre-processed resource to the application when a use request of the application occurs.

6. The Blu-ray disc playback apparatus of claim 4 or 5, wherein
if a use request of the application for the resource occurs before the pre-processing operation is completed, the controller controls the application to directly perform the pre-processing operation.

7. The Blu-ray disc playback apparatus according to anyone of claim 4 to 6, wherein
if a use request of the application for the resource occurs before the pre-processing operation is completed, the controller first performs the pre-processing operation through the middleware, and then, provides the pre-processed resource to the application.

8. The Blu-ray disc playback apparatus according to anyone of claim 1 to 7, wherein
the controller acquires lifecycle information of the resource from the Blu-ray disc, and manages the resource based on the acquired lifecycle information.

9. The Blu-ray disc playback apparatus according to anyone of claim 2 to 7, wherein
the controller reads the application information and the resource detailed information based on a Blu-ray disc Java Object (BDJO) file recorded on the Blu-ray disc.

10. The Blu-ray disc playback apparatus according to anyone of claim 2 to 7, wherein
the controller reads the application information by using a Blu-ray disc Java Object (BDJO) file recorded on the Blu-ray disc, and
reads the resource detailed information by using a title resource table recorded on the Blu-ray disc.

11. A disc loading method for a Blu-ray disc playback apparatus, the method comprising:
running a middleware after a Blu-ray disc is mounted in the Blu-ray disc playback apparatus; and
performing in parallel an activation operation to activate an application recorded on the Blu-ray disc for controlling a processing action with respect to the Blu-ray disc by using the middleware, and a resource process operation to read and process at least one resource recorded on the Blu-ray disc and used by the application.

12. The disc loading method of claim 11, wherein
the performing in parallel comprises:
reading application information and resource detailed information from at least one file recorded on the Blu-ray disc by using the middleware; and
reading and activating the application recorded on the Blu-ray disc based on the read application information according to an application manager within the middleware, and acquiring and processing the at least one resource recorded on the Blu-ray disc based on the resource detailed information according to a resource manager program within the middleware.

13. The disc loading method of claim 12, wherein
the resource process operation comprises at least one of a pre-processing operation to process the resource in a form that can be used by the application, a communication operation to provide a pre-processed resource to the application, and a keeping operation to keep the pre-processed resource.

14. The disc loading method of claim 12 or 13, wherein
the application information and the resource detailed information are read from a Blu-ray disc Java Object (BDJO) file recorded on the Blu-ray disc.

15. The disc loading method according to anyone of claim 12 to 14, wherein
the application information is read from a Blu-ray disc Java Object (BDJO) file recorded on the Blu-ray disc, and
the resource detailed information is read from a title resource table recorded on the Blu-ray disc.
